# EUROPÄISCHE PATENTSCHRIFT

(11) **EP 3 626 576 B1**
(45) Veröffentlichungstag und Bekanntmachung des Hinweises auf die Patenterteilung: **26.08.2026**
(21) Anmeldenummer: 19186956.9
(22) Anmeldetag: 18.07.2019
(51) Int. Cl.: B61L 15/00, B61L 23/34, G01P 15/00, G01P 21/00

(54) **VERFAHREN UND VORRICHTUNG ZUR DIAGNOSE UND ÜBERWACHUNG VON FAHRZEUGKOMPONENTEN**
METHOD AND DEVICE FOR DIAGNOSING AND MONITORING VEHICLE COMPONENTS
PROCÉDÉ ET DISPOSITIF DE DIAGNOSTIC ET DE SURVEILLANCE DES COMPOSANTS DE VÉHICULE

(30) Priorität: 19.09.2018 AT 507982018
(43) Veröffentlichungstag der Anmeldung: 25.03.2020
(73) Patentinhaber: Siemens Mobility Austria GmbH, 1210 Wien (AT)
(72) Erfinder: Dejaco, Daniela, 8010 Graz (AT); Girstmair, Bernhard Lukas, 8010 Graz (AT); Grabner, Gerald, 8010 Graz (AT); Haigermoser, Andreas, 8455 Oberhaag (AT); Simon, Johannes, 8043 Graz (AT)
(74) Vertreter: Siemens Patent Attorneys

(56) Entgegenhaltungen:
- WO-A1-02/22424
- WO-A1-2014/048737
- DE-A1- 102015 218 941

## Beschreibung

Die Erfindung bezieht sich auf ein Verfahren und eine Vorrichtung zur Diagnose und Überwachung von Fahrzeugkomponenten, insbesondere für Schienenfahrzeuge, wobei mittels zumindest eines ersten Sensors erste Messungen bezüglich zumindest eines ersten Messpunkts, eines zweiten Sensors zweite Messungen bezüglich eines zweiten Messpunkts, eines dritten Sensors dritte Messungen bezüglich eines dritten Messpunkts und eines vierten Sensors vierte Messungen bezüglich eines vierten Messpunkts eines Fahrzeugs durchgeführt werden, wobei mittels des zumindest ersten Sensors, des zweiten Sensors, des dritten Sensors und des vierten Sensors Beschleunigungsmessungen bezüglich dreier Raumrichtungen durchgeführt werden, wobei in zumindest einer Recheneinheit mit entsprechend übermittelten Messsignalen eine Signalverarbeitung sowie eine Signalauswertung erfolgt, wobei von dem ersten Sensor erste Messsignale, von dem zweiten Sensor zweite Messsignale, von dem dritten Sensor dritte Messsignale und von dem vierten Sensor vierte Messsignale der Signalverarbeitung und der Signalauswertung zugeführt werden, und dabei aus den ersten Messsignalen zumindest ein erster Messwertsatz, aus den zweiten Messsignalen ein zweiter Messwertsatz, aus den dritten Messsignalen ein dritter Messwertsatz und aus den vierten Messsignalen ein vierter Messwertsatz gebildet werden.

Fahrzeuge, insbesondere Schienenfahrzeuge müssen eine hohe Fahrsicherheit aufweisen. Eine genaue Einschätzung und Vorhersage von technischen Zuständen von Fahrzeugen, Fahrwerken und weiteren Fahrzeugkomponenten ist daher wichtig.

Eine Diagnoseeinrichtung für ein Schienenfahrzeug ist in der aus dem Stand der Technik bekannten WO 2014/048768 A1 dargestellt, wobei Beschleunigungssensoren und ein auf einem Fahrwerk angeordnetes elektronisches Diagnosegerät vorgesehen sind. Entsprechende Diagnosen des Fahrwerks erfolgen auf Grundlage von Beschleunigungsmessungen, welche in dem Diagnosegerät ausgewertet werden.

Weiterhin ist in der WO 2014/048737 A1 eine Vorrichtung zur Diagnose und Überwachung von Fahrzeugkomponenten eines Schienenfahrzeugs beschrieben, welche Sensoren, u.a. Beschleunigungssensoren an einem Fahrwerksrahmen des Schienenfahrzeugs, umfasst. Es erfolgt eine Fahrwerksüberwachung auf Grundlage verschiedener Messsignale, wobei Beschleunigungssignale und Temperatursignale beschrieben sind.

Eine hohe Qualität sowie eine geringe Fehlerrate von Messungen sind für Fahrzeugdiagnosen wichtig. Insbesondere ist es erforderlich, dass Messfehler aufgrund von Störungen, Beschädigungen von Sensoren etc. erkannt werden können und dementsprechend fehlerhafte Messwerte aus Diagnosevorgängen (z.B. einer Auswertung und Interpretation von Messwerten und einer Erzeugung von Warnereignissen etc.) ausgeschlossen oder zumindest kenntlich gemacht werden können.

Aus dem Stand der Technik ist hierzu beispielsweise die DE 10 2011 106 302 B3 bekannt, in welcher ein Verfahren zur Erkennung von Messfehlern von Sensoren beschrieben ist. Mittels eines Kalibrierverfahrens werden zunächst Sensorwerte bestimmt, mittels Inversion einer Messmatrix Kräfte und/oder Momente ermittelt und danach mittels Rücktransformation der Kräfte und/oder Momente Pseudosensorwerte berechnet. Die Sensorwerte werden mit den Pseudosensorwerten verglichen, um daraus einen möglichen Messfehler zu detektieren. Dieser Ansatz weist in seiner bekannten Form den Nachteil auf, dass keine Methode zur genauen Zuordnung eines Messfehlers zu einem bestimmten Sensor dargestellt ist.

Der Erfindung liegt daher die Aufgabe zugrunde, ein gegenüber dem Stand der Technik weiterentwickeltes Verfahren und eine weiterentwickelte Vorrichtung anzugeben, welche eine besonders präzise Identifikation fehlerhafter Sensoren ermöglichen.

Erfindungsgemäß wird diese Aufgabe gelöst mit einem Verfahren gemäß Anspruch 1 bzw. mit einer Vorrichtung gemäß Anspruch 8.

Hierbei wird bei einem Verfahren der eingangs genannten Art, bei dem mittels des zumindest ersten Messwertsatzes, des zweiten Messwertsatzes und des dritten Messwertsatzes ein Referenzwertsatz bezüglich eines Referenzpunkts des Fahrzeugs bestimmt wird und mittels des Referenzwertsatzes ein Prüfwertsatz bezüglich des vierten Messpunkts gebildet wird, wobei die Bestimmung des Referenzwertsatzes über einen ersten kinematischen Zusammenhang zwischen dem zumindest ersten Messpunkt, dem zweiten Messpunkt und dem dritten Messpunkt einerseits sowie dem Referenzpunkt andererseits erfolgt, wobei die Bestimmung des Prüfwertsatzes über einen zweiten kinematischen Zusammenhang zwischen dem Referenzpunkt und dem vierten Messpunkt erfolgt, und bei dem mittels Vergleich des Prüfwertsatzes mit dem vierten Messwertsatz, wobei Differenzen zwischen Beschleunigungskomponenten des Prüfwertsatzes und Beschleunigungskomponenten des vierten Messwertsatzes gebildet werden, eine Störung oder ein Schaden des vierten Sensors detektiert wird, eine Diagnose und/oder eine Überwachung des vierten Sensors, d.h. einer Fahrzeugkomponente, und somit ein hohes Sicherheitsniveau sowie eine hohe Verfügbarkeit in einem Fahrzeugbetrieb bewirkt.

Es ist auch eine Überwachung des ersten Sensors, des zweiten Sensors oder des dritten Sensors denkbar. Beispielsweise erfolgt für eine Überwachung des ersten Sensors eine Bildung des Referenzwertsatzes und des Prüfwertsatzes auf Basis des von dem zweiten Sensor stammenden zweiten Messwertsatzes, des von dem dritten Sensor stammenden dritten Messwertsatzes und des von dem vierten Sensor stammenden vierten Messwertsatzes. Eine Detektion von Fehlern des ersten Sensors wird mittels Vergleich des Prüfwertsatzes mit dem von dem ersten Sensor stammenden ersten Messwertsatz durchgeführt. Dadurch wird eine gegenseitige Überprüfung bzw. Überwachung des ersten Sensors, des zweiten Sensors, des dritten Sensors und des vierten Sensors erreicht.

Folglich werden keine separaten Prüfvorrichtungen für den ersten Sensor, den zweiten Sensor, den dritten Sensor und den vierten Sensor benötigt, wodurch eine konstruktive sowie funktionale Vereinfachung erzielt wird.

Die Diagnose und/oder die Überwachung der Sensoren weist ein hohes Sicherheitsniveau bzw. eine geringe Fehlerrate auf, da der Referenzwertsatz und der Prüfwertsatz auf Basis von drei Sensoren bzw. drei Messwertsätzen gebildet werden. Werden der Referenzwertsatz und der Prüfwertsatz beispielsweise auf Basis des ersten Sensors bzw. des ersten Messwertsatzes, des zweiten Sensors bzw. des zweiten Messwertsatzes und des dritten Sensors bzw. des dritten Messwertsatzes gebildet, wird der vierte Sensor überwacht und weist z.B. der erste Messwertsatz einen Fehler auf, so wird dieser Fehler bei der Bildung des Referenzwertsatzes und des Prüfwertsatzes teilweise von dem zweiten Messwertsatz und dem dritten Messwertsatz kompensiert.

Der Fehler des ersten Messwertsatzes wirkt sich im Vergleich des Prüfwertsatzes mit dem vierten Messwertsatz zur Detektion einer Störung des vierten Sensors nicht insoweit aus, dass eine real vorhandene Störung des vierten Sensors nicht erkannt wird oder dass eine real nicht vorhandene Störung des vierten Sensors angezeigt wird.

Der erste Sensor, der zweite Sensor, der dritte Sensor und der vierte Sensor können beispielsweise als Dreiachs-Beschleunigungssensoren ausgebildet sein, welche auf einem Fahrzeug oder einer Fahrzeugkomponente (z.B. auf einem Fahrwerk, einem Fahrwerksrahmen oder auf Radsatzlagergehäusen etc.) angeordnet sind und Beschleunigungen in drei Raumrichtung messen.

Es ist günstig, wenn der Referenzwertsatz und der Prüfwertsatz aus Winkellagedifferenzwerten zwischen einem Referenz-Koordinatensystem in dem Referenzpunkt einerseits und einem ersten Koordinatensystem in dem zumindest ersten Messpunkt, einem zweiten Koordinatensystem in dem zweiten Messpunkt, einem dritten Koordinatensystem in dem dritten Messpunkt sowie einem vierten Koordinatensystem in dem vierten Messpunkt andererseits gebildet werden. Durch diese Maßnahme können auch gegenüber dem Referenz-Koordinatensystem verdrehte Einbaulagen des ersten Sensors, des zweiten Sensors, des dritten Sensors und des vierten Sensors berücksichtigt werden.

Eine vorteilhafte Ausgestaltung erhält man, wenn der Referenzwertsatz unter Vernachlässigung quadratischer Winkelgeschwindigkeitsterme gebildet wird.

Durch diese Maßnahme vereinfacht sich das erfindungsgemäße Verfahren und es wird eine erforderliche Rechenleistung zur Überwachung des ersten Sensors, des zweiten Sensors, des dritten Sensors und/oder des vierten Sensors reduziert.

Weitere vorteilhafte Ausgestaltungen sind Gegenstand der abhängigen Ansprüche.

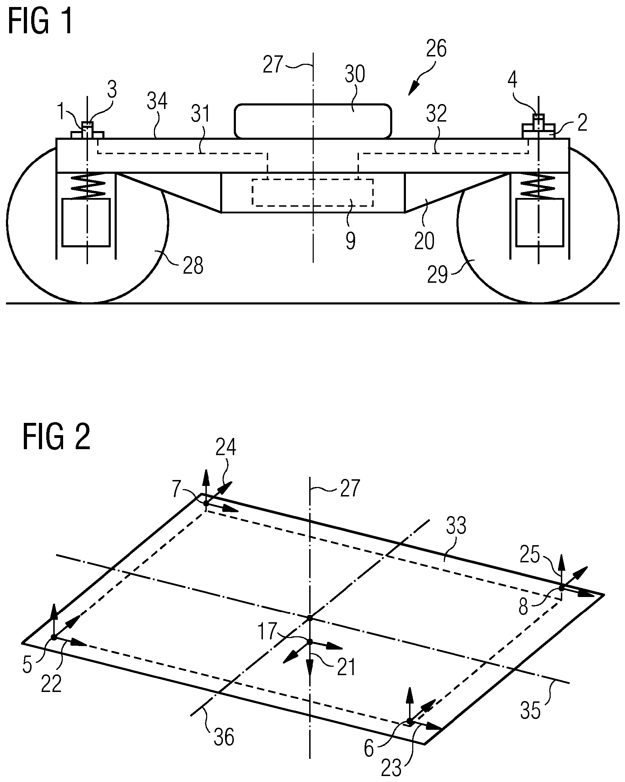

Fig. 1 zeigt ein Fahrwerk 26 eines als Schienenfahrzeug ausgeführten Fahrzeugs. Das Fahrwerk 26 umfasst einen primärgefederten Fahrwerksrahmen 20 mit einer Deckfläche 34, welcher mit einem ersten Radsatz 28 und einem zweiten Radsatz 29 verbunden ist und auf welchem eine Sekundärfedervorrichtung 30 angeordnet ist. Das Fahrwerk 26 ist mit einem nicht gezeigten Wagenkasten verbunden.

Auf dem Fahrwerksrahmen 20 sind in Bereichen über dem ersten Radsatz 28 und dem zweiten Radsatz 29 ein erster Sensor 1, ein zweiter Sensor 2, ein dritter Sensor 3 sowie ein vierter Sensor 4 vorgesehen, welche bezüglich einer Hochachse 27 des Fahrwerksrahmens 20 versetzt zueinander angeordnet sind. Dadurch wird bei Durchführung eines erfindungsgemäßen Verfahrens eine hohe Rechenstabilität erzielt.

Weiterhin ist auf dem Fahrwerksrahmen 20 eine Recheneinheit 9 vorgesehen, welche über eine erste Datenleitung 31 mit dem ersten Sensor 1 sowie über eine zweite Datenleitung 32 mit dem zweiten Sensor 2 und über weitere, nicht sichtbare Datenleitungen mit dem dritten Sensor 3 sowie mit dem vierten Sensor 4 verbunden ist.

Erfindungsgemäß ist es, zur Sicherstellung einer Redundanz, auch vorstellbar, mehr als eine Recheneinheit 9 mit dem ersten Sensor 1, dem zweiten Sensor 2, dem dritten Sensor 3 und dem vierten Sensor 4 zu verbinden.

Weiterhin ist es denkbar, dass die Recheneinheit 9 beispielsweise in dem Wagenkasten des Fahrzeugs vorgesehen ist und der erste Sensor 1, der zweite Sensor 2, der dritte Sensor 3 und der vierte Sensor 4 über entsprechende Leitungswege zwischen dem Fahrwerk 26 und dem Wagenkasten mit der Recheneinheit 9 verbunden sind.

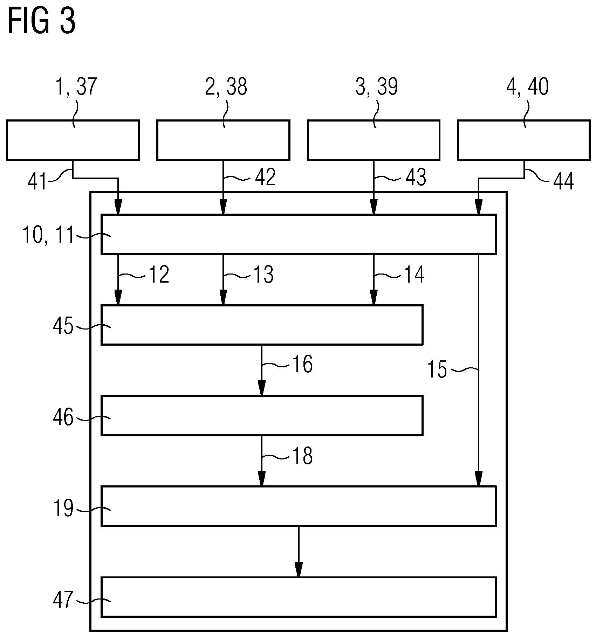

Der erste Sensor 1, der zweite Sensor 2, der dritte Sensor 3 und der vierte Sensor 4 sowie die Recheneinheit 9 sind über ein Bordstromnetz des Fahrzeugs und einen Borddatenbus des Fahrzeugs, welche nicht dargestellt sind, verbunden. Mittels des ersten Sensors 1, des zweiten Sensors 2, des dritten Sensors 3 und des vierten Sensors 4 sowie der Recheneinheit 9 wird eine im Zusammenhang mit Fig. 3 beschriebene, beispielhafte Ausführungsvariante eines erfindungsgemäßen Verfahrens durchgeführt.

In Fig. 2 ist eine schematische Darstellung mit einem ersten Messpunkt 5, einem zweiten Messpunkt 6, einem dritten Messpunkt 7 und einem vierten Messpunkt 8 gezeigt. Der erste Messpunkt 5, der zweite Messpunkt 6, der dritte Messpunkt 7 und der vierte Messpunkt 8 korrelieren mit in Fig. 1 gezeigten Einbaupositionen eines ersten Sensors 1, eines zweiten Sensors 2, eines dritten Sensors 3 und eines vierten Sensors 4 auf einem ebenfalls in Fig. 1 dargestellten Fahrwerksrahmen 20.

Eine Basis-Messebene 33 wird aus einer in Fig. 1 sichtbaren Deckfläche 34 des Fahrwerksrahmens 20 gebildet. Auf der Basis-Messebene 33 ist der erste Messpunkt 5 vorgesehen. Der zweite Messpunkt 6, der dritte Messpunkt 7 und der vierte Messpunkt 8 sind relativ zu dieser Basis-Messebene 33 und relativ zueinander bezüglich einer auch in Fig. 1 gezeigten Hochachse 27 des Fahrwerksrahmens 20 versetzt.

Ein Referenzpunkt 17, welcher im Schwerpunkt des Fahrwerksrahmens 20 liegt, ist relativ zu dieser Basis-Messebene 33 bezüglich dieser Hochachse 27 nach unten versetzt.

Erfindungsgemäß ist es auch vorstellbar, dass der erste Messpunkt 5 bzw. der erste Sensor 1, der zweite Messpunkt 6 bzw. der zweite Sensor 2, der dritte Messpunkt 7 bzw. der dritte Sensor 3 und der vierte Messpunkt 8 bzw. der vierte Sensor 4 relativ zu einer anderen Ebene, z.B. zu einer Längsebene des Fahrwerksrahmens 20 oder einer Querebene des Fahrwerksrahmens 20, versetzt angeordnet sind und jeweils unterschiedliche Positionen in Bezug auf diese Ebene aufweisen, d.h. nicht in einer Ebene vorgesehen sind, jedoch gleiche Höhenlagen in Bezug auf die Hochachse 27 aufweisen.

In dem ersten Messpunkt 5 ist ein erstes Koordinatensystem 22, in dem zweiten Messpunkt 6 ein zweites Koordinatensystem 23, in dem dritten Messpunkt 7 ein drittes Koordinatensystem 24 und in dem vierten Messpunkt 8 ein viertes Koordinatensystem 25 sowie in dem Referenzpunkt 17 ein Referenz-Koordinatensystem 21 vorgesehen. Aus Beschleunigungen des ersten Messpunkts 5 in Koordinatenrichtungen des ersten Koordinatensystems 22, des zweiten Messpunkts 6 in Koordinatenrichtungen des zweiten Koordinatensystems 23 sowie des dritten Messpunkts 7 in Koordinatenrichtungen des dritten Koordinatensystems 24 werden mittels einer im Zusammenhang mit Fig. 3 beschriebenen Ausführungsvariante eines erfindungsgemäßen Verfahrens über einen ersten kinematischen Zusammenhang Referenz-Beschleunigungen des Referenzpunkts 17 in Koordinatenrichtungen des Referenz-Koordinatensystems 21 bestimmt. Aus den Beschleunigungen des Referenzpunkts 17 werden, wie im Zusammenhang mit Fig. 3 beschrieben, über einen zweiten kinematischen Zusammenhang Beschleunigungen des vierten Messpunkts 8 in Koordinatenrichtungen des vierten Koordinatensystems 25 bestimmt.

Die für den vierten Messpunkt 8 wie oben beschrieben bestimmten Beschleunigungen werden, wie ebenfalls im Zusammenhang mit Fig. 3 offenbart, mit von dem vierten Sensor 4 an dem vierten Messpunkt 8 gemessenen Beschleunigungen verglichen.

Da das erste Koordinatensystem 22, das zweite Koordinatensystem 23, das dritte Koordinatensystem 24 und das vierte Koordinatensystem 25 relativ zu dem Referenz-Koordinatensystem 21 nicht nur versetzt sondern auch verdreht sind, muss eine Koordinatentransformation mittels aus dem Stand der Technik bekannter Drehmatrizen R durchgeführt werden.

Eine in Fig. 3 schematisch, als Flussdiagramm dargestellte, beispielhafte Ausführungsvariante eines erfindungsgemäßen, teilweise computerimplementierten Verfahrens ist in einem als Schienenfahrzeug ausgeführten Fahrzeug implementiert.

Ein erster Sensor 1, ein zweiter Sensor 2, ein dritter Sensor 3 und ein vierter Sensor 4 sind, wie auch in Fig. 1 gezeigt, an verschiedenen Stellen eines ebenfalls in Fig. 1 dargestellten Fahrwerksrahmens 20 angeordnet und weisen, gemäß Fig. 1 und Fig. 2, jeweils unterschiedliche Höhenlagen in Bezug auf eine in Fig. 1 gezeigte Hochachse 27 des Fahrwerksrahmens 20 auf.

Der erste Sensor 1, der zweite Sensor 2, der dritte Sensor 3 und der vierte Sensor 4 sind als Dreiachs-Beschleunigungssensoren ausgeführt und messen Beschleunigungen in Richtungen einer Längsachse 35 des Fahrwerksrahmens 20, einer Querachse 36 des Fahrwerksrahmens 20, die in Fig. 2 dargestellt sind, und der Hochachse 27 des Fahrwerksrahmens 20.

Der erste Sensor 1 führt dementsprechend erste Messungen 37 bezüglich eines in Fig. 2 gezeigten ersten Messpunkts 5, der zweite Sensor 2 zweite Messungen 38 bezüglich eines in Fig. 2 gezeigten zweiten Messpunkts 6, der dritte Sensor 3 dritte Messungen 39 bezüglich eines in Fig. 2 gezeigten dritten Messpunkts 7 und der vierte Sensor 4 vierte Messungen 40 bezüglich eines in Fig. 2 gezeigten vierten Messpunkts 8 durch.

Entsprechende Messergebnisse werden als Messsignale über eine erste Datenleitung 31 und eine zweite Datenleitung 32, welche in Fig. 1 gezeigt sind, sowie weitere Datenleitungen an eine Recheneinheit 9 des Fahrzeugs, die ebenfalls in Fig. 1 dargestellt ist, übermittelt und dort einer Signalverarbeitung 10 und einer Signalauswertung 11 zugeführt. Von dem ersten Sensor 1 werden dabei erste Messsignale 41, von dem zweiten Sensor 2 zweite Messsignale 42, von dem dritten Sensor 3 dritte Messsignale 43 und von dem vierten Sensor 4 vierte Messsignale 44 der Signalverarbeitung 10 und der Signalauswertung 11 zugeführt.

Bei der Signalverarbeitung 10 und der Signalauswertung 11 werden aus den ersten Messsignalen 41, den zweiten Messsignalen 42, den dritten Messsignalen 43 und den vierten Messsignalen 44 Beschleunigungsinformationen extrahiert und entsprechende Beschleunigungskomponenten in die Richtungen der Längsachse 35, der Querachse 36 und der Hochachse 27 des Fahrwerksrahmens 20, d.h. Beschleunigungsvektoren a (bezüglich des ersten Sensors 1 ein erster Beschleunigungsvektor a₁, bezüglich des zweiten Sensors 2 ein zweiter Beschleunigungsvektor a₂, bezüglich des dritten Sensors 3 ein dritter Beschleunigungsvektor a₃ und bezüglich des vierten Sensors 4 ein vierter Beschleunigungsvektor) gebildet. Hierbei wird aus dem ersten Messsignal 41 ein erster Messwertsatz 12, aus dem zweiten Messsignal 42 ein zweiter Messwertsatz 13, aus dem dritten Messsignal 43 ein dritter Messwertsatz 14 und aus dem vierten Messsignal 44 ein vierter Messwertsatz 15 erzeugt, d.h. der erste Messwertsatz 12, der zweite Messwertsatz 13, der dritte Messwertsatz 14 und der vierte Messwertsatz 15 umfassen die entsprechenden Beschleunigungsvektoren a.

In der Recheneinheit 9 erfolgt mit dem ersten Messwertsatz 12, dem zweiten Messwertsatz 13, dem dritten Messwertsatz 14 und dem vierten Messwertsatz 15 eine Referenzwertsatz-Bildung 45. Hierzu wird über erste kinematische Zusammenhänge zwischen dem ersten Messwertsatz 12 und dem ersten Messpunkt 5, dem zweiten Messwertsatz 13 und dem zweiten Messpunkt 6, dem dritten Messwertsatz 14 und dem dritten Messpunkt 7 sowie dem vierten Messwertsatz 15 und dem vierten Messpunkt 8 einerseits und einem in Fig. 2 dargestellten Referenzpunkt 17 andererseits ein Referenzwertsatz 16 gebildet. Der Referenzwertsatz 16 umfasst Referenz-Beschleunigungskomponenten bzw. einen Referenz-Beschleunigungsvektor a₀ bezüglich des Referenzpunkts 17.

Weiterhin erfolgt über einen zweiten kinematischen Zusammenhang zwischen dem Referenzwertsatz 16 sowie dem Referenzpunkt 17 einerseits und dem vierten Messpunkt 8 andererseits eine Prüfwertsatz-Bildung 46. Ein entsprechend erzeugter Prüfwertsatz 18 umfasst aus dem ersten Messwertsatz 12, dem zweiten Messwertsatz 13, dem dritten Messwertsatz 14 bzw. dem Referenzwertsatz 16 berechnete Beschleunigungskomponenten bzw. einen Prüf-Beschleunigungsvektor aₚ bezüglich des vierten Messpunkts 8.

Zur Bildung des Referenzwertsatzes 16 und des Prüfwertsatzes 18 wird grundsätzlich folgender erster kinematischer Zusammenhang eingesetzt: $a = {a}_{0} + ω \times \left(ω\times {r}_{P}\right) + \dot{ω} \times {r}_{P}$

Der Referenz-Beschleunigungsvektor a₀ wird dabei mittels Inversion des oben genannten ersten kinematischen Zusammenhangs für die Beschleunigungsvektoren a aus den Beschleunigungsvektoren a, einem Winkelgeschwindigkeitsvektor ω des Fahrwerksrahmens 20, einem Winkelbeschleunigungsvektor *ω̇* des Fahrwerksrahmens 20 sowie aus Abstandsvektoren r_{P} zwischen dem ersten Messpunkt 5, dem zweiten Messpunkt 6 und dem dritten Messpunkt 7 einerseits und dem Referenzpunkt 17 andererseits gebildet.

Der Referenz-Beschleunigungsvektor a₀ weist Komponenten in drei Raumrichtungen, eine x-Referenzbeschleunigungskomponente a₀ₓ, eine y-Referenzbeschleunigungskomponente a_{0y} sowie eine z-Referenzbeschleunigungskomponente a_{0z}, auf und ist wie folgt definiert: ${a}_{0} = \left[\begin{matrix}{a}_{0 x} \\ {a}_{0 y} \\ {a}_{0 z}\end{matrix}\right]$

Der Term *ω* × (*ω* × *r_{P}*) wird wie folgt umgeformt: $ω \times \left(ω\times {r}_{P}\right) = \left[\begin{matrix}0 & - {r}_{x} & - {r}_{x} & 0 & {r}_{z} & {r}_{y} \\ - {r}_{y} & 0 & - {r}_{y} & {r}_{z} & 0 & {r}_{x} \\ - {r}_{z} & - {r}_{z} & 0 & {r}_{y} & {r}_{x} & 0\end{matrix}\right] ⋅ \left[\begin{matrix}{ω}_{x}^{2} \\ {ω}_{y}^{2} \\ {ω}_{z}^{2} \\ {ω}_{y} {ω}_{z} \\ {ω}_{x} {ω}_{z} \\ {ω}_{x} {ω}_{y}\end{matrix}\right]$

Wobei die Abstandsvektoren *r_{P} =* [*rₓ r_{y} r_{z}*]*^{T}* Abstandskomponenten in Richtung der Längsachse 35 des Fahrwerksrahmens 20 (x-Abstandskomponenten rₓ), in Richtung der Querachse 36 des Fahrwerksrahmens 20 (y-Abstandskomponenten r_{y}) sowie in Richtung der Hochachse 27 des Fahrwerksrahmens 20 (z-Abstandskomponenten r_{z}) und der Winkelgeschwindigkeitsvektor *ω* = [*ωₓ ω_{y} ω_{z}*]*^{T}* Winkelgeschwindigkeitskomponenten bezüglich der Längsachse 35 des Fahrwerksrahmens 20 (x-Winkelgeschwindigkeitskomponente ωₓ), bezüglich der Querachse 36 des Fahrwerksrahmens 20 (y-Winkelgeschwindigkeitskomponente ω_{y}) sowie bezüglich der Hochachse 27 des Fahrwerksrahmens 20 (z-Winkelgeschwindigkeitskomponente ω_{z}) aufweisen.

Der Term *ω̇* × *r_{P}* wird folgt umgeformt: $\dot{ω} \times {r}_{P} = \left[\begin{matrix}0 & - {r}_{z} & {r}_{y} \\ {r}_{z} & 0 & - {r}_{x} \\ - {r}_{y} & {r}_{x} & 0\end{matrix}\right] ⋅ \dot{ω}$

Der Beschleunigungsvektor a lautet mit einer 3x3 Einheitsmatrix E₃ und einer Drehmatrix R, mittels welcher berücksichtigt wird, dass ein erstes Koordinatensystem 22 des ersten Messpunkts 5, ein zweites Koordinatensystem 23 des zweiten Messpunkts 6 und ein drittes Koordinatensystem 24 des dritten Messpunkts 7 relativ zu einem Referenz-Koordinatensystem 21 verdreht sind, d.h.

Winkellagedifferenzen auftreten (siehe Fig. 2): $a = R ⋅ \left[{E}_{3}⋅\left[\begin{matrix}0 & - {r}_{x} & - {r}_{x} & 0 & {r}_{z} & {r}_{y} \\ - {r}_{y} & 0 & - {r}_{y} & {r}_{z} & 0 & {r}_{x} \\ - {r}_{z} & - {r}_{z} & 0 & {r}_{y} & {r}_{x} & 0\end{matrix}\right]⋅\left[\begin{matrix}0 & - {r}_{z} & {r}_{y} \\ {r}_{z} & 0 & - {r}_{x} \\ - {r}_{y} & {r}_{x} & 0\end{matrix}\right]\right] ⋅ \left[\begin{matrix}{a}_{0 x} \\ {a}_{0 y} \\ {a}_{0 z} \\ {ω}_{x}^{2} \\ {ω}_{y}^{2} \\ {ω}_{z}^{2} \\ {ω}_{y} {ω}_{z} \\ {ω}_{x} {ω}_{z} \\ {ω}_{x} {ω}_{y} \\ \dot{ω}\end{matrix}\right]$

Aus einem Geometrieterm $D = R ⋅ \left[{E}_{3}⋅\left[\begin{matrix}0 & - {r}_{x} & - {r}_{x} & 0 & {r}_{z} & {r}_{y} \\ - {r}_{y} & 0 & - {r}_{y} & {r}_{z} & 0 & {r}_{x} \\ - {r}_{z} & - {r}_{z} & 0 & {r}_{y} & {r}_{x} & 0\end{matrix}\right]⋅\left[\begin{matrix}0 & - {r}_{z} & {r}_{y} \\ {r}_{z} & 0 & - {r}_{x} \\ - {r}_{y} & {r}_{x} & 0\end{matrix}\right]\right]$ und den aus den ersten Messungen 37, den zweiten Messungen 38 und den dritten Messungen 39 stammenden Beschleunigungsvektoren $a = \left[\begin{matrix}{a}_{1} \\ {a}_{2} \\ {a}_{3}\end{matrix}\right]$, wobei a₁, a₂ und a₃ jeweils Beschleunigungskomponenten in Richtung der Längsachse 35 des Fahrwerksrahmens 20, der Querachse 36 des Fahrwerksrahmens 20 und der Hochachse 27 des Fahrwerksrahmens 20 aufweisen, werden mittels einer Bildungsvorschrift $\left[\begin{matrix}{a}_{0 x} \\ {a}_{0 y} \\ {a}_{0 z} \\ {ω}_{x}^{2} \\ {ω}_{y}^{2} \\ {ω}_{z}^{2} \\ {ω}_{y} {ω}_{z} \\ {ω}_{x} {ω}_{z} \\ {ω}_{x} {ω}_{y} \\ \dot{ω}\end{matrix}\right] = {D}^{- 1} ⋅ a$ der Referenz-Beschleunigungsvektor a₀, bzw. dessen Komponenten in drei Raumrichtungen, sowie der Winkelgeschwindigkeitsvektor ω und der Winkelbeschleunigungsvektor *ω̇* bestimmt.

Genannte Bildungsvorschrift lässt sich mittels eines aus dem Stand der Technik bekannten Verfahrens der Ausgleichungsrechnung (z.B. Methode der kleinsten Quadrate) lösen.

Erfindungsgemäß ist es auch vorstellbar, kleine, quadratische Winkelgeschwindigkeitsterme $\left[\begin{matrix}{ω}_{x}^{2} \\ {ω}_{y}^{2} \\ {ω}_{z}^{2} \\ {ω}_{y} {ω}_{z} \\ {ω}_{x} {ω}_{z} \\ {ω}_{x} {ω}_{y}\end{matrix}\right]$ zu vernachlässigen, wodurch eine erforderliche Rechenleistung verringert werden kann.

Mit dem Referenz-Beschleunigungsvektor a₀, dem Winkelgeschwindigkeitsvektor ω (sofern die genannten, kleinen Terme nicht vernachlässigt werden), dem Winkelbeschleunigungsvektor *ω̇* und einem Prüf-Abstandsvektor r_{Pp} zwischen dem Referenzpunkt 17 und dem vierten Messpunkt 8 wird mittels eines zweiten kinematischen Zusammenhangs ${a}_{p} = {a}_{0} + ω \times \left(ω\times {r}_{Pp}\right) + \dot{ω} \times {r}_{Pp}$ der Prüf-Beschleunigungsvektor aₚ bezüglich des vierten Messpunkts 8 bestimmt, aus welchem der Prüfwertsatz 18 gebildet wird.

Es erfolgt ein Vergleich 19 des Prüfwertsatzes 18 mit dem vierten Messwertsatz 15, wobei Differenzen zwischen den Beschleunigungskomponenten des Prüfwertsatzes 18 und den Beschleunigungskomponenten des vierten Messwertsatzes 15 gebildet werden. Unterschreiten diese Differenzen dabei festgelegte Schwellwerte, so weist der vierte Sensor 4 eine Störung oder einen Schaden auf, welche oder welcher detektiert wird.

Auf Grundlage einer derartigen Detektion erfolgt eine Warnereignis-Erzeugung 47, d.h. eine Erzeugung von Überwachungs- und/oder Diagnosedaten, in der Recheneinheit 9.

Die Überwachungs- und/oder Diagnosedaten werden mittels Funk über eine Fahrzeugantenne mit einer Sende- und Empfangseinheit, mit welcher die Recheneinheit 9 verbunden ist, an einen Wartungsstand, welcher einen entsprechenden Empfänger aufweist, gesendet und dort auf einem Wartungsrechner ausgewertet.

Weiterhin ist es vorstellbar, die Überwachungs- und/oder Diagnosedaten beispielsweise über einen nicht gezeigten Universal Serial Bus (USB) - Anschluss der Recheneinheit 9 auszulesen und anschließend in einem Depot oder in dem Wartungsstand auszuwerten.

Erfindungsgemäß ist es jedoch auch denkbar, die Überwachungs- und/oder Diagnosedaten direkt von der Recheneinheit 9 über einen Datenbus an einen Führerstand des Fahrzeugs zu übertragen und dort auf einer Führerstands-Anzeige darzustellen.

Somit erfüllt das erfindungsgemäße Verfahren eine Überwachungsfunktion bezüglich einer Fahrzeugkomponente (d.h. bezüglich des vierten Sensors 4). Weiterhin ist es vorstellbar, dass das erfindungsgemäße Verfahren eine Diagnosefunktion bezüglich der Fahrzeugkomponente erfüllt. Hierzu werden über einen langen Zeitraum (Tage, Wochen etc.) Vergleiche 19 ausgeführt und anhand eines Langzeitverhaltens des vierten Sensors 4 geprüft, ob sich über diesen Zeitraum die Differenzen zwischen den Beschleunigungskomponenten des Prüfwertsatzes 18 und den Beschleunigungskomponenten des vierten Messwertsatzes 15 vergrößern. Wird eine derartige Vergrößerung detektiert, so weist dies auf einen sich ausbildenden Defekt des vierten Sensors 4 hin. Über eine entsprechend Prognose einer Rest-Standzeit des vierten Sensors 4 wird dessen Tausch mittels Auslösung einer Ersatzteilbeschaffung vorbereitet.

Neben einer Überwachung und/oder Diagnose des vierten Sensors 4 erfolgt auch eine Überwachung und/oder Diagnose des ersten Sensors 1, des zweiten Sensors 2 und des dritten Sensors 3. Für eine Überwachung und/oder Diagnose des ersten Sensors 1 erfolgt eine Bildung des Referenzwertsatzes 16 und des Prüfwertsatzes 18 auf Basis des zweiten Messwertsatzes 13, des dritten Messwertsatzes 14 und des vierten Messwertsatzes 15. Eine Detektion von Störungen oder Schäden des ersten Sensors 1 wird mittels Vergleich 19 des Prüfwertsatzes 18 mit dem ersten Messwertsatz 12 durchgeführt.

Dementsprechend erfolgt eine Detektion von Störungen oder Schäden des zweiten Sensors 2 auf Basis des ersten Messwertsatzes 12, des dritten Messwertsatzes 14 sowie des vierten Messwertsatzes 15 und von Störungen oder Schäden des dritten Sensors 3 auf Basis des ersten Messwertsatzes 12, des zweiten Messwertsatzes 13 und des vierten Messwertsatzes 15. Es werden daher für die Überwachung und/oder Diagnose jedes der vier Sensoren jeweils die verbleibenden drei Sensoren eingesetzt.

Dadurch wird eine gegenseitige Überprüfung bzw. Überwachung oder Diagnose des ersten Sensors 1, des zweiten Sensors 2, des dritten Sensors 3 und des vierten Sensors 4 erreicht. Erfindungsgemäß können selbstverständlich mehr als vier Sensoren vorgesehen sein, wodurch eine höhere Qualität der Überwachung und/oder Diagnose bewirkt wird.

Das erfindungsgemäße Verfahren, d.h. die erste Messung 37, die zweite Messung 38, die dritte Messung 39 und die vierte Messung 40 sowie die Signalverarbeitung 10, die Signalauswertung 11, die Referenzwertsatz-Bildung 45, die Prüfwertsatz-Bildung 46, der Vergleich 19 und die Warnereignis-Erzeugung 47, wird laufend, während eines Einsatzes des Fahrzeugs mit einer Frequenz von 10 Hz ausgeführt, wobei selbstverständlich auch höhere oder geringere Frequenzen denkbar sind.

Weiterhin ist es auch denkbar, die erste Messung 37, die zweite Messung 38, die dritte Messung 39 und die vierte Messung 40 einerseits sowie die Signalverarbeitung 10, die Signalauswertung 11, die Referenzwertsatz-Bildung 45, die Prüfwertsatz-Bildung 46, den Vergleich 19 und die Warnereignis-Erzeugung 47 andererseits mit unterschiedlichen Frequenzen durchzuführen.

Es ist erfindungsgemäß auch möglich, dass einzelne Verfahrensschritte zusammengefasst werden, d.h. in einem Schritt ausgeführt werden, wie z.B. die Referenzwertsatz-Bildung 45 und die Prüfwertsatz-Bildung 46.

Erfindungsgemäß ist es weiterhin auch denkbar, dass die Sensoren beispielsweise nicht auf dem Fahrwerksrahmen 20 sondern auch auf oder in anderen Fahrzeugkomponenten, wie z.B. auf Dämpfern, in Radsatzlagergehäusen etc. vorgesehen sind, beispielsweise der erste Sensor 1 auf einem ersten Dämpfer, der zweite Sensor 2 auf einem zweiten Dämpfer, der dritte Sensor 3 auf einem dritten Dämpfer und der vierte Sensor 4 auf einem vierten Dämpfer. Mittels Messung und Auswertung von Dämpferparametern (z.B. Geschwindigkeiten, Beschleunigungen oder Drücke etc.) nach dem erfindungsgemäßen Verfahren wird so eine gegenseitige Überwachung des ersten Dämpfers, des zweiten Dämpfers, des dritten Dämpfers und des vierten Dämpfers, d.h. von Fahrzeugkomponenten, ermöglicht.

### Liste der Bezeichnungen

- 1: Erster Sensor
- 2: Zweiter Sensor
- 3: Dritter Sensor
- 4: Vierter Sensor
- 5: Erster Messpunkt
- 6: Zweiter Messpunkt
- 7: Dritter Messpunkt
- 8: Vierter Messpunkt
- 9: Recheneinheit
- 10: Signalverarbeitung
- 11: Signalauswertung
- 12: Erster Messwertsatz
- 13: Zweiter Messwertsatz
- 14: Dritter Messwertsatz
- 15: Vierter Messwertsatz
- 16: Referenzwertsatz
- 17: Referenzpunkt
- 18: Prüfwertsatz
- 19: Vergleich
- 20: Fahrwerksrahmen
- 21: Referenz-Koordinatensystem
- 22: Erstes Koordinatensystem
- 23: Zweites Koordinatensystem
- 24: Drittes Koordinatensystem
- 25: Viertes Koordinatensystem
- 26: Fahrwerk
- 27: Hochachse
- 28: Erster Radsatz
- 29: Zweiter Radsatz
- 30: Sekundärfedervorrichtung
- 31: Erste Datenleitung
- 32: Zweite Datenleitung
- 33: Basis-Messebene
- 34: Deckfläche
- 35: Längsachse
- 36: Querachse
- 37: Erste Messung
- 38: Zweite Messung
- 39: Dritte Messung
- 40: Vierte Messung
- 41: Erstes Messsignal
- 42: Zweites Messsignal
- 43: Drittes Messsignal
- 44: Viertes Messsignal
- 45: Referenzwertsatz-Bildung
- 46: Prüfwertsatz-Bildung
- 47: Warnereignis-Erzeugung

- a: Beschleunigungsvektor
- a₁: Erster Beschleunigungsvektor
- a₂: Zweiter Beschleunigungsvektor
- a₃: Dritter Beschleunigungsvektor
- a₀: Referenz-Beschleunigungsvektor
- a₀ₓ: x-Referenzbeschleunigungskomponente
- a_{0y}: y-Referenzbeschleunigungskomponente
- a_{0z}: z-Referenzbeschleunigungskomponente
- aₚ: Prüf-Beschleunigungsvektor
- ω: Winkelgeschwindigkeitsvektor
- ω̇: Winkelbeschleunigungsvektor
- r_{P}: Abstandsvektor
- rₓ: x-Abstandskomponente
- r_{y}: y-Abstandskomponente
- r_{z}: z-Abstandskomponente
- ωₓ: x-Winkelgeschwindigkeitskomponente
- ω_{y}: y-Winkelgeschwindigkeitskomponente
- ω_{z}: z-Winkelgeschwindigkeitskomponente
- E₃: Einheitsmatrix
- R: Drehmatrix
- D: Geometrieterm
- r_{Pp}: Prüf-Abstandsvektor

## Patentansprüche

1. Verfahren zur Diagnose und Überwachung von Fahrzeugkomponenten, insbesondere für Schienenfahrzeuge, wobei mittels zumindest eines ersten Sensors erste Messungen bezüglich zumindest eines ersten Messpunkts, eines zweiten Sensors zweite Messungen bezüglich eines zweiten Messpunkts, eines dritten Sensors dritte Messungen bezüglich eines dritten Messpunkts und eines vierten Sensors vierte Messungen bezüglich eines vierten Messpunkts eines Fahrzeugs durchgeführt werden, wobei mittels des zumindest ersten Sensors (1), des zweiten Sensors (2), des dritten Sensors (3) und des vierten Sensors (4) Beschleunigungsmessungen bezüglich dreier Raumrichtungen durchgeführt werden, wobei in zumindest einer Recheneinheit mit entsprechend übermittelten Messsignalen eine Signalverarbeitung sowie eine Signalauswertung erfolgt, wobei von dem ersten Sensor erste Messsignale, von dem zweiten Sensor zweite Messsignale, von dem dritten Sensor dritte Messsignale und von dem vierten Sensor vierte Messsignale der Signalverarbeitung und der Signalauswertung zugeführt werden, und dabei aus den ersten Messsignalen zumindest ein erster Messwertsatz, aus den zweiten Messsignalen ein zweiter Messwertsatz, aus den dritten Messsignalen ein dritter Messwertsatz und aus den vierten Messsignalen ein vierter Messwertsatz gebildet werden, **dadurch gekennzeichnet, dass** mittels des zumindest ersten Messwertsatzes (12), des zweiten Messwertsatzes (13) und des dritten Messwertsatzes (14) ein Referenzwertsatz (16) bezüglich eines Referenzpunkts (17) des Fahrzeugs bestimmt wird und mittels des Referenzwertsatzes (16) ein Prüfwertsatz (18) bezüglich des vierten Messpunkts (8) gebildet wird, wobei die Bestimmung des Referenzwertsatzes (16) über einen ersten kinematischen Zusammenhang zwischen dem zumindest ersten Messpunkt (5), dem zweiten Messpunkt (6) und dem dritten Messpunkt (7) einerseits sowie dem Referenzpunkt (17) andererseits erfolgt, wobei die Bestimmung des Prüfwertsatzes (18) über einen zweiten kinematischen Zusammenhang zwischen dem Referenzpunkt (17) und dem vierten Messpunkt (8) erfolgt, und dass mittels Vergleich (19) des Prüfwertsatzes (18) mit dem vierten Messwertsatz (15), wobei Differenzen zwischen Beschleunigungskomponenten des Prüfwertsatzes (18) und Beschleunigungskomponenten des vierten Messwertsatzes (15) gebildet werden, eine Störung oder ein Schaden des vierten Sensors (4) detektiert wird.

2. Verfahren nach Anspruch 1, **dadurch gekennzeichnet, dass** mittels des zumindest ersten Sensors (1), des zweiten Sensors (2), des dritten Sensors (3) und des vierten Sensors (4) Beschleunigungen eines Fahrwerksrahmens (20) des Fahrzeugs gemessen werden.

3. Verfahren nach Anspruch 1 oder 2, **dadurch gekennzeichnet, dass** der Referenzwertsatz (16) und der Prüfwertsatz (18) aus Referenz-Beschleunigungswerten an dem Referenzpunkt (17), Winkelgeschwindigkeitswerten, Winkelbeschleunigungswerten sowie aus Abstandswerten zwischen dem Referenzpunkt (17) einerseits und dem zumindest ersten Messpunkt (5), dem zweiten Messpunkt (6), dem dritten Messpunkt (7) und dem vierten Messpunkt (8) andererseits gebildet werden.

4. Verfahren nach Anspruch 3, **dadurch gekennzeichnet, dass** der Referenzwertsatz (16) und der Prüfwertsatz (18) aus Winkellagedifferenzwerten zwischen einem Referenz-Koordinatensystem (21) in dem Referenzpunkt (17) einerseits und einem ersten Koordinatensystem (22) in dem zumindest ersten Messpunkt (5), einem zweiten Koordinatensystem (23) in dem zweiten Messpunkt (6), einem dritten Koordinatensystem (24) in dem dritten Messpunkt (7) sowie einem vierten Koordinatensystem (25) in dem vierten Messpunkt (8) andererseits gebildet werden.

5. Verfahren nach Anspruch 3 oder 4, **dadurch gekennzeichnet, dass** der Referenzwertsatz (16) unter Vernachlässigung quadratischer Winkelgeschwindigkeitsterme gebildet wird.

6. Verfahren nach einem der Ansprüche 1 bis 5, **dadurch gekennzeichnet, dass** der Referenzwertsatz (16) mittels einer Ausgleichungsrechnung gebildet wird.

7. Verfahren nach einem der Ansprüche 1 bis 6, **dadurch gekennzeichnet, dass** eine Überwachung und/oder Diagnose des zumindest ersten Sensors (1), des zweiten Sensors (2), des dritten Sensors (3) und des vierten Sensors (4) erfolgt, wobei für die Überwachung und/oder Diagnose jedes von zumindest vier Sensoren jeweils die zumindest drei verbleibenden Sensoren eingesetzt werden.

8. Vorrichtung zur Diagnose und Überwachung von Fahrzeugkomponenten umfassend zumindest einen ersten (1), zweiten (2), dritten (3) und vierten Sensor (4) sowie zumindest eine Recheneinheit (9), **dadurch gekennzeichnet, dass** die zumindest eine Recheneinheit dazu ausgelegt ist, das Verfahren nach einem der Ansprüche 1 - 7 auszuführen und der zumindest erste (1), zweite (2), dritte (3) und vierte Sensor (4) sowie die zumindest eine Recheneinheit (9) auf dem Fahrzeug angeordnet sind.

9. Vorrichtung nach Anspruch 8, **dadurch gekennzeichnet, dass** der zumindest erste Sensor (1), der zweite Sensor (2), der dritte Sensor (3) und der vierte Sensor (4) sowie die zumindest eine Recheneinheit (9) auf einem Fahrwerk (26) des Fahrzeugs vorgesehen sind.

10. Vorrichtung nach Anspruch 8, **dadurch gekennzeichnet, dass** der zumindest erste Sensor (1), der zweite Sensor (2), der dritte Sensor (3) und der vierte Sensor (4) auf dem Fahrwerk (26) des Fahrzeugs und die zumindest eine Recheneinheit (9) in oder auf einem Wagenkasten des Fahrzeugs vorgesehen sind.

11. Vorrichtung nach einem der Ansprüche 8 bis 10, **dadurch gekennzeichnet, dass** der zumindest erste Sensor (1), der zweite Sensor (2), der dritte Sensor (3) und der vierte Sensor (4) jeweils unterschiedliche Einbaupositionen bezüglich einer Ebene des Fahrzeugs aufweisen.

## Claims

1. Method for the diagnosis and monitoring of vehicle components, in particular for rail vehicles, wherein first measurements with respect to at least a first measuring point are carried out by means of at least a first sensor, second measurements with respect to a second measuring point are carried out by means of at least a second sensor, third measurements with respect to a third measuring point are carried out by means of at least a third sensor and fourth measurements with respect to at least a fourth measuring point of a vehicle are carried out by means of a fourth sensor, wherein by means of the at least first sensor (1), the second sensor (2), the third sensor (3) and the fourth sensor (4), acceleration measurements are carried out with respect to three spatial directions, wherein signal processing and a signal evaluation takes place in at least one arithmetic unit with correspondingly transmitted measuring signals, wherein first measuring signals are fed from the first sensor, second measuring signals are fed from the second sensor, third measuring signals are fed from the third sensor and fourth measuring signals are fed from the fourth sensor to signal processing and signal evaluation, and thereby at least one first measured value set is formed from the first measurement signals, one second measured value set is formed from the second measurement signals, one third measured value set is formed from the third measurement signals and one fourth measured value set is formed from the fourth measurement signals, **characterised in that** by means of the at least first measured value set (12), the second measured value set (13) and the third measured value set (14), a reference value set (16) is determined with respect to a reference point (17) of the vehicle and by means of the reference value set (16), a test value set (18) is formed with respect to the fourth measuring point (8), wherein the determination of the reference value set (16) takes place by way of a first kinematic correlation between the at least first measuring point (5), the second measuring point (6) and the third measuring point (7) on the one hand and the reference point (17) on the other hand, wherein the determination of the test value set (18) takes place by way of a second kinematic correlation between the reference point (17) and the fourth measurement point (8), and that by comparison (19) of the test value set (18) with the fourth measured value set (15), wherein differences between acceleration components of the test value set (18) and acceleration components of the fourth measured value set (15) are formed, a fault in or damage to the fourth sensor (4) is detected.

2. Method according to claim 1, **characterised in that** by means of the at least first sensor (1), the second sensor (2), the third sensor (3) and the fourth sensor (4), accelerations of a chassis frame (20) of the vehicle are measured.

3. Method according to claim 1 or 2, **characterised in that** the reference value set (16) and the test value set (18) are formed from reference acceleration values at the reference point (17), angular velocity values, angular acceleration values as well as from distance values between the reference point (17) on the one hand and the at least first measuring point (5), the second measuring point (6), the third measuring point (7) and the fourth measuring point (8) on the other.

4. Method according to claim 3, **characterised in that** the reference value set (16) and the test value set (18) are formed from angular position difference values between a reference coordinate system (21) in the reference point (17) on the one hand and a first coordinate system (22) in the at least first measuring point (5), a second coordinate system (23) in the second measuring point (6), a third coordinate system (24) in the third measuring point (7) and a fourth coordinate system (25) in the fourth measuring point (8) on the other hand.

5. Method according to claim 3 or 4, **characterised in that** the reference value set (16) is formed by ignoring square angular velocity terms.

6. Method according to one of claims 1 to 5, **characterised in that** the reference value set (16) is formed by means of an equalisation calculation.

7. Method according to one of claims 1 to 6, **characterised in that** monitoring and/or diagnosis of the at least first sensor (1), the second sensor (2), the third sensor (3) and the fourth sensor (4) is carried out, wherein for monitoring and/or diagnosis of each of at least four sensors, the at least three remaining sensors are used respectively.

8. Device for the diagnosis and monitoring of vehicle components comprising at least a first (1), second (2), third (3) and fourth sensor (4) as well as at least one arithmetic unit (9), **characterised in that** the at least one arithmetic unit is designed to carry out the method according to one of claims 1 - 7 and the at least first (1), second (2), third (3) and fourth sensor (4) as well as the at least one arithmetic unit (9) are arranged on the vehicle.

9. Device according to claim 8, **characterised in that** the at least first sensor (1), the second sensor (2), the third sensor (3) and the fourth sensor (4) as well as the at least one arithmetic unit (9) are provided on a chassis (26) of the vehicle.

10. Device according to claim 8, **characterised in that** the at least first sensor (1), the second sensor (2), the third sensor (3) and the fourth sensor (4) are provided on the chassis (26) of the vehicle and the at least one arithmetic unit (9) in or on a vehicle body of the vehicle.

11. Device according to one of claims 8 to 10, **characterised in that** the at least first sensor (1), the second sensor (2), the third sensor (3) and the fourth sensor (4) each have different installation positions with respect to a plane of the vehicle.

## Revendications

1. Procédé pour le diagnostic et la surveillance de composants de véhicule, en particulier pour des véhicules ferroviaires, dans lequel des premières mesures en ce qui concerne au moins un premier point de mesure d'un véhicule sont mises en œuvre au moyen d'au moins un premier capteur, des deuxièmes mesures en ce qui concerne un deuxième point de mesure d'un véhicule sont mises en œuvre au moyen d'un deuxième capteur, des troisièmes mesures en ce qui concerne un troisième point de mesure d'un véhicule sont mises en œuvre au moyen d'un troisième capteur, et des quatrièmes mesures en ce qui concerne un quatrième point de mesure d'un véhicule sont mises en œuvre au moyen d'un quatrième capteur, dans lequel des mesures d'accélération en ce qui concerne trois directions spatiales sont mises en œuvre au moyen de l'au moins un premier capteur (1), du deuxième capteur (2), du troisième capteur (3) et du quatrième capteur (4), dans lequel un traitement de signaux ainsi qu'une évaluation de signaux s'effectuent dans au moins une unité de calcul avec des signaux de mesure transmis de manière correspondante, dans lequel des premiers signaux de mesure sont introduits par le premier capteur dans le traitement de signaux et l'évaluation de signaux, des deuxièmes signaux de mesure sont introduits par le deuxième capteur dans le traitement de signaux et l'évaluation de signaux, des troisièmes signaux de mesure sont introduits par le troisième capteur dans le traitement de signaux et l'évaluation de signaux, et des quatrièmes signaux de mesure sont introduits par le quatrième capteur dans le traitement de signaux et l'évaluation de signaux, et à cet effet au moins un premier ensemble de valeurs de mesure est formé à partir des premiers signaux de mesure, un deuxième ensemble de valeurs de mesure est formé à partir des deuxièmes signaux de mesure, un troisième ensemble de valeurs de mesure est formé à partir des troisièmes signaux de mesure, et un quatrième ensemble de valeurs de mesure est formé à partir des quatrièmes signaux de mesure, **caractérisé en ce qu'**un ensemble de valeurs de référence (16) en ce qui concerne un point de référence (17) du véhicule est déterminé au moyen de l'au moins un premier ensemble de valeurs de mesure (12), du deuxième ensemble de valeurs de mesure (13) et du troisième ensemble de valeurs de mesure (14) et un ensemble de valeurs de contrôle (18) en ce qui concerne le quatrième point de mesure (8) est formé au moyen de l'ensemble de valeurs de référence (16), dans lequel la détermination de l'ensemble de valeurs de référence (16) s'effectue par le biais d'une première relation cinématique entre l'au moins un premier point de mesure (5), le deuxième point de mesure (6) et le troisième point de mesure (7) d'une part et le point de référence (17) d'autre part, dans lequel la détermination de l'ensemble de valeurs de contrôle (18) s'effectue par le biais d'une deuxième relation cinématique entre le point de référence (17) et le quatrième point de mesure (8), et **en ce qu'**un dysfonctionnement ou un dommage du quatrième capteur (4) est détecté au moyen d'une comparaison (19) de l'ensemble de valeurs de contrôle (18) avec le quatrième ensemble de valeurs de mesure (15), dans lequel des différences entre des composantes d'accélération de l'ensemble de valeurs de contrôle (18) et des composantes d'accélération du quatrième ensemble de valeurs de mesure (15) sont formées.

2. Procédé selon la revendication 1, **caractérisé en ce que** des accélérations d'un cadre de châssis (20) du véhicule sont mesurées au moyen de l'au moins un premier capteur (1), du deuxième capteur (2), du troisième capteur (3) et du quatrième capteur (4).

3. Procédé selon la revendication 1 ou 2, **caractérisé en ce que** l'ensemble de valeurs de référence (16) et l'ensemble de valeurs de contrôle (18) sont formés à partir de valeurs d'accélération de référence au niveau du point de référence (17), de valeurs de vitesse angulaire, de valeurs d'accélération angulaire ainsi que de valeurs de distance entre le point de référence (17) d'une part et l'au moins un premier point de mesure (5), le deuxième point de mesure (6), le troisième point de mesure (7) et le quatrième point de mesure (8) d'autre part.

4. Procédé selon la revendication 3, **caractérisé en ce que** l'ensemble de valeurs de référence (16) et l'ensemble de valeurs de contrôle (18) sont formés à partir de valeurs de différence de position angulaire entre un système de coordonnées de référence (21) dans le point de référence (17) d'une part et un premier système de coordonnées (22) dans l'au moins un premier point de mesure (5), un deuxième système de coordonnées (23) dans le deuxième point de mesure (6), un troisième système de coordonnées (24) dans le troisième point de mesure (7) ainsi qu'un quatrième système de coordonnées (25) dans le quatrième point de mesure (8) d'autre part.

5. Procédé selon la revendication 3 ou 4, **caractérisé en ce que** l'ensemble de valeurs de référence (16) est formé avec négligence de termes de vitesse angulaire quadratique.

6. Procédé selon l'une des revendications 1 à 5, **caractérisé en ce que** l'ensemble de valeurs de référence (16) est formé au moyen d'un calcul de compensation.

7. Procédé selon l'une des revendications 1 à 6, **caractérisé en ce qu'**il s'effectue une surveillance et/ou un diagnostic de l'au moins un premier capteur (1), du deuxième capteur (2), du troisième capteur (3) et du quatrième capteur (4), dans lequel, pour la surveillance et/ou le diagnostic de chacun des au moins quatre capteurs, respectivement les au moins trois capteurs restants sont utilisés.

8. Dispositif pour le diagnostic et la surveillance de composants de véhicule comportant au moins un premier capteur (1), un deuxième capteur (2), un troisième capteur (3) et un quatrième capteur (4) ainsi qu'au moins une unité de calcul (9), **caractérisé en ce que** l'au moins une unité de calcul est conçue pour exécuter le procédé selon l'une des revendications 1 à 7, et l'au moins un premier capteur (1), le deuxième capteur (2), le troisième capteur (3) et le quatrième capteur (4) ainsi que l'au moins une unité de calcul (9) sont disposés sur le véhicule.

9. Dispositif selon la revendication 8, **caractérisé en ce que** l'au moins un premier capteur (1), le deuxième capteur (2), le troisième capteur (3) et le quatrième capteur (4) ainsi que l'au moins une unité de calcul (9) sont prévus sur un châssis (26) du véhicule.

10. Dispositif selon la revendication 8, **caractérisé en ce que** l'au moins un premier capteur (1), le deuxième capteur (2), le troisième capteur (3) et le quatrième capteur (4) sont prévus sur le châssis (26) du véhicule et l'au moins une unité de calcul (9) est prévue dans ou sur une caisse de wagon du véhicule.

11. Dispositif selon l'une des revendications 8 à 10, **caractérisé en ce que** l'au moins un premier capteur (1), le deuxième capteur (2), le troisième capteur (3) et le quatrième capteur (4) présentent respectivement des positions de montage différentes par rapport à un plan du véhicule.
